# EUROPÄISCHE PATENTANMELDUNG

(11) **EP 2 322 474 A1**
(43) Veröffentlichungstag der Anmeldung: **18.05.2011**
(21) Anmeldenummer: 09176045.4
(22) Anmeldetag: 16.11.2009
(51) Int. Cl.: C01B 31/02, C01B 33/025

(54) **Verfahren zur Pyrolyse von Kohlehydraten**

(71) Anmelder: Evonik Degussa GmbH, 45128 Essen (DE)
(72) Erfinder: Karl, Alfons, Dr., 63584 Gründau (DE); Lang, Jürgen Erwin, Dr., 76229 Karlsruhe (DE); Rauleder, Harwig, Dr., 79618 Rheinfelden (DE); Frings, Bodo, Dr., 33758 Schloss Holte (DE)

(57) **Zusammenfassung**

Die vorliegende Erfindung betrifft Verfahren zur technischen Pyrolyse von einem Kohlenhydrat oder Kohlenhydratgemisch unter Zusatz von amorphem Kohlenstoff, ein so erhältliches Pyrolyseprodukt und dessen Verwendung, insbesondere als Reduktionsmittel bei der Herstellung von Silicium aus Siliciumdioxid und Kohlenstoff bei hoher Temperatur.

## Beschreibung

Die vorliegende Erfindung betrifft ein technisches Verfahren zur Pyrolyse von Kohlenhydraten, insbesondere von Zucker, das so erhältliche Pyrolyseprodukt und dessen Verwendung, bevorzugt bei der Herstellung von Silicium, besonders bevorzugt Solarsilicium, aus Siliciumdioxid und Kohlenstoff bei hoher Temperatur.

Es ist bekannt, Kohlehydrate, beispielsweise Mono-, Oligo- und Polysaccharide, in Gaschromatographen zu pyrolysieren.

US 5,882,726 offenbart ein Verfahren zur Herstellung einer Kohlenstoff-Kohlenstoff-Zusammensetzung, wobei eine Pyrolyse eines niedrig schmelzenden Zuckers durchgeführt wird.

GB 733 376 ist ein Verfahren zur Reinigung einer Zuckerlösung sowie zur Pyrolyse bei 300 bis 400 °C zu entnehmen.

Es ist ebenfalls bekannt, Zucker bei hoher Temperatur zu pyrolysieren, um eine elektronenleitfähige Substanz zu erzeugen (WO 2005/051840).

Bei der großtechnischen Pyrolyse von Kohlenhydraten kann es zu Problemen durch Karamelisierung und Schaumbildung kommen, was die Prozessführung und den Prozessablauf erheblich stören kann. Zur Lösung dieses Problems wird in der DE 10 2008 042 498 vorgeschlagen dem Kohlenhydrat vor der Pyrolyse ein Siliciumdioxid zuzusetzen, welches als Entschäumer wirkt und die Karamelbildung reduzieren soll. Nachteilig an diesem Verfahren ist, dass man ein Pyrolyseprodukt erhält welches mit dem Siliciumdioxid verunreinigt ist und je nach Anwendung des Pyrolyseprodukts wieder aufgereinigt werden muss.

Weiter ist bekannt, u. a. Zucker als Reduktionsmittel mit einem geringen Anteil an Verunreingungen (US 4,294,811, WO 2007/106860) oder als Bindemittel (US 4,247,528) bei der Herstellung von reinem Silicium einzusetzen.

Der vorliegenden Erfindung lag die Aufgabe zugrunde, ein verbessertes Verfahren zur Pyrolyse von Kohlenhydraten, insbesondere von Zucker, bereitzustellen, bei dem die Schaumbildung verringert oder idealer Weise vermieden wird und welches die Nachteile der Verfahren des Standes der Technik nicht oder nur in verringertem Maße aufweist.

Eine spezielle Aufgabe bestand darin ein Äquivalent zu Holzschnitzeln bei der Siliciumherstellung bereit zu stellen, das den Reinheits- und Stabilitätsanforderungen bei der Solarsiliciumherstellung gerecht wird, dennoch aber die Funktion der Holzschnitzel, nämlich ein Verkleben des Möllers zu verhindern, erfüllt.

Weitere nicht explizit genannte Aufgaben ergeben sich aus dem Gesamtzusammenhang der nachfolgenden Beschreibung, Beispiele und Ansprüche.

Die Aufgaben werden erfindungsgemäß entsprechend den Angaben in der Beschreibung, den Beispielen und den Patentansprüchen gelöst.

So wurde in überraschender Weise gefunden, dass durch Zugabe von amorphem Kohlenstoff zu dem zu pyrolysierenden Kohlenhydrat der Schaumbildungseffekt reduziert oder ganz unterdrückt werden kann. Auf diese Weise wird ein Pyrolyseprodukt erhalten, welches annäherd vollständig aus Kohlenstoff besteht und somit einen sehr niedrigen Aschegehalt hat. Dies ist ein großer Vorteil im Vergleich zu Pyrolysaten welche mit Siliciumdioxiden als Entschäumer hergestellt werden. Die erfindungsgemäßen Pyrolysate können somit zur Herstellung von hochreinen Folgeprodukten verwendet werden.

Mit dem erfindungsgemäßen Verfahren kann man industrielle Prozesse zur Pyrolyse von Kohlehydraten in einfacher und wirtschaftlicher Weise nun auch ohne störende Schaumbildung und ohne störende Siliciumdioxidverunreinigungen im Endprodukt betreiben.

Darüber hinaus wurde bei der Durchführung des erfindungsgemäßen Verfahrens beobachtet, dass eine Karamellbildung vermindert bzw. unterbunden werden kann.

In einer speziellen Ausführungsform, der in-situ Pyrolyse bei metallurgischen Prozessen, hat das erfindungsgemäße Verfahren zudem zudem den Vorteil, dass die entstehenden Gase zu einer Auflockerung der Schmelze führen, d.h. ein Verkleben verhindert werden kannn.

Das erfindungsgemäße Verfahren erlaubt es die Pyrolyse bei sehr niedrigen Temperaturen durchzuführen. So ist es vorteilhaft, da besonders Energie sparend (Tieftemperaturfahrweise), im erfindungsgemäßen Verfahren die Pyrolysetemparatur von 1600 °C bis 1700°C auf unter 800°C abzusenken. So betreibt man das erfindungsgemäße Verfahren in einer ersten bevorzugten Ausführungsform bevorzugt bei einer Temperatur von 250 °C bis 800 °C, besonders bevorzugt bei 300 bis 800 °C, ganz besonders bevorzugt bei 350 bis 700 °C und speziell bevorzugt bei 400 bis 600 °C. Dieses Verfahren ist äußerst energieeffizient und hat zudem den Vorteil, dass die Karamellbildung reduziert und die Handhabung der gasförmigen Reaktionsprodukte erleichtert wird.

Es ist jedoch prinzipiell in einer zweiten bevorzugten Ausführungsform auch möglich die Reaktion zwischen 800 und 1700 °C, besonders bevorzugt zwischen 900 und 1600 °C, ganz besonders bevorzugt bei 1000 bis 1500 °C und insbesondere bei 1000 bis 1400 °C durchzuführen. Hierbei wird in der Regel ein Graphit-haltiges Pyrolyseprodukt erhalten, welches für bestimmte Anwendungen vorteilhafte Eigenschaften aufweist. Bevorzugt man ein Graphit-haltiges Pyrolyseprodukt, so sollte man eine Pyrolysetemperatur von 1 300 bis 1 500 °C anstreben.

Das erfindungsgemäße Verfahren führt man vorteilhaft unter Schutzgas und/oder vermindertem Druck (Vakuum) aus. So führt man das erfindungsgemäße Verfahren vorteilhaft bei einem Druck von 1 mbar bis 1 bar (Umgebungsdruck), insbesondere von 1 bis 10 mbar, durch. Zweckmäßigerweise wird die verwendete Pyrolyseapparatur vor Beginn der Pyrolyse getrocknet und durch Spülen mit einem Inertgas, wie Stickstoff oder Argon oder Helium, praktisch frei von Sauerstoff gespült. Die Pyrolysedauer beim erfindungsgemäßen Verfahren beträgt in der Regel zwischen 1 Minute und 48 Stunden, vorzugsweise zwischen 1/4 Stunde und 18 Stunden, insbesondere zwischen 1/2 Stunde und 12 Stunden bei besagter Pyrolysetemperatur, dabei kann die Aufheizzeit bis zum Erreichen der gewünschten Pyrolysetemperatur zusätzlich in gleicher Größenordnung liegen, insbesondere zwischen 1/4 Stunde und 8 Stunden. Das vorliegende Verfahren führt man in der Regel batchweise aus; man kann es aber auch kontinuierlich ausführen.

Da Kohlenhydrate inder Regel eine sehr hohe Reinheit aufweisen und auch amorphe Kohlenstoffe mit einer hohen Reinheit verfügbar sind, kann mit dem erfindungsgemäßen Verfahren ein C-basierendes Pyrolyseprodukt erhalten werden, welches Kohle, insbesondere mit Graphitanteilen und optional Anteile an anderen Kohlenstoffformen, wie Koks enthält. Es ist insbesondere möglich ein Produkt zu erzeugen, welches besonders arm an Verunreinigungen, wie z. B. B-, P-, As- und Al-Verbindungen ist. Ein solches erfindungsgemäßes Pyrolyseprodukt kann vorteilhaft als Reduktionsmittel bei der Herstellung von Silicium, insbesondere metallurgischem Silicium, ja sogar Solarsilicum, aus Siliciumdioxid bei hoher Temperatur verwendet werden. Insbesondere kann das erfindungsgemäße graphithaltige Pyrolyseprodukt aufgrund seiner Leitfähigkeitseigenschaften in einem Lichtbogenreaktor verwendet werden.

Prinzipell kann das Pyrolyseprodukt jedoch auch in allen anderen Anwendungsgebieten eingesetzt werden in dem reiner Kohlenstoff benötigt wird, z. B. bei der Metallcarbidherstellung (Borcarbid, Siliciumcarbid, etc.) oder der Herstellung von Graphitformteilen, bevorzugt Elektroden insbesondere hochreine Elektroden, Kohlebürsten, Heizelemente, Wärmetauscher oder als Aufkohlungsmittel für Stahl oder bei der Diamantherstellung oder als Reduktionsmittel bei der Hartmetall-Herstellung (W, Mo, Cr, Ti, Ta, Co, V, etc.) oder bei der Zirkon-Herstellung oder als Abdeckung von Metallschmelzen oder als Ersatz von Holzschnitzeln bei metallurgischen Prozessen.

Gegenstand der vorliegenden Erfindung ist daher ein Verfahren zur technischen, d. h. industriellen Pyrolyse von einem Kohlenhydrat oder Kohlenhydratgemisch unter Zusatz von amorphem Kohlenstoff.

Als Kohlenhydrat bzw. Komponente des Kohlenhydratgemischs setzt man beim erfindungsgemäßen Verfahren bevorzugt Monosaccharide, d. h. Aldosen oder Ketosen, wie Triosen, Tetrosen, Pentosen, Hexosen, Heptosen, besonders Glucose sowie Fruktose, aber auch entsprechende auf besagten Monomeren basierende Oligo- und Polysaccharide, wie Lactose, Maltose, Saccharose, Raffinose, - um nur einige oder deren Derivate zu nennen - bis hin zur Stärke, einschließlich Amylose und Amylopektin, den Glykogenen, den Glycosanen und Fructosanen, - um nur einige Polysaccharide zu nennen -, ein.

Wird ein besonders reines Pyrolyseprodukt benötigt, so wird das erfindungsgemäße Verfahren bevorzugt dahingehend modifiziert, dass man die zuvor genannten Kohlenhydrate durch eine Behandlung unter Verwendung eines Ionenaustauschers zusätzlich reinigt, wobei man das Kohlenhydrat in einem geeigneten Lösemittel, vorteilhaft Wasser, besonders bevorzugt deionisiertes oder VE-Wasser, löst, über eine Säule, diese gefüllt mit einem Ionenaustauscherharz, vorzugsweise einem anionischen oder kationischen Harz, führt, die resultierende Lösung aufkonzentriert, beispielsweise durch Entfernen von Lösemittelanteilen durch Erwärmen - insbesondere unter vermindertem Druck - und das so gereinigte Kohlenhydrat vorteilhaft kristallin gewinnt, beispielsweise durch Kühlen der Lösung und anschließender Abtrennung der kristallinen Anteile, u. a. mittels Filtration oder Zentrifuge. Dem Fachmann sind verschiedene Ionenaustauscher zur entfernung unterschiedlicher Ionen bekannt. Es können grundsätzlich so viele Ionenaustauscherschritte hintereinander geschaltet werden bis die gewünschte Reinheit des Zuckerlösung erreicht ist. Alternativ zur Aufreinigung über Ionenaustauscher können jedoch auch andere dem Fachmann bekannte Maßnahmen ergriffen werden um die Kohlenhydratedukte zu reinigen. Beispielsweise seien hier genannt: Zugabe von Komplexbildnern, elektrochemische Aufreinigungsmethoden, Chromatographische Methoden.

Im erfindungsgemäßen Verfahren können auch Gemische aus mindestens zwei der zuvor genannten Kohlenhydrate als Kohlenhydrat bzw. Kohlenhydratkomponente eingesetz werden. Besonders bevorzugt man beim erfindungsgemäßen Verfahren einen in wirtschaftlichen Mengen verfügbaren kristallinen Zucker, einen Zucker, wie er beispielsweise durch Kristallisation einer Lösung bzw. einem Saft aus Zuckerrohr oder Rüben in an sich bekannter Weise gewonnen werden kann, d. h. handelsüblicher kristalliner Zucker, beispielsweise Raffinade-Zucker, vorzugsweise einen kristallinen Zucker mit dem stoffspezifischen Schmelzpunkt/Erweichungsbereich sowie einer mittleren Partikelgröße von 1 µm bis 10 cm, besonders bevorzugt von 10 µm bis 1 cm, insbesondere von 100 µm bis 0,5 cm. Die Bestimmung der Partikelgröße kann beispielsweise - aber nicht ausschließlich - mittels Siebanalyse, TEM, REM oder Lichtmikroskopie erfolgen. Man kann aber auch ein Kohlenhydrat in gelöster Form einsetzen, beispielsweise - aber nicht auschließlich - in wässriger Lösung, wobei das Lösemittel vor Erreichen der eigentlichen Pyrolysetemperatur freilich mehr oder weniger zügig verdunstet.

Als amorpher Kohlenstoff wird bevorzugt Aktivkohle oder ein Ruß oder ein pyrolysiertes Kohlenhydrat, insbesondere pyrolysierter Zucker, oder Gemische davon verwendet.

Besonders bevorzugt werden Ruße verwendet welche nach dem Furnaceruß Verfahren, dem Gasruß Verfahren, dem Flammruß-Acetylenruß- oder dem Thermalrußverfahren hergestellt wurden. Diese Verfahren zur Herstellung von Ruß (Carbon Black) sind dem Fachmann hinlänglich bekannt. Als Verfahren zur Herstellung von Rußen ist z. B. das Gasruß-Verfahren (DRP 29261, DE-PS 2931907, DE-PS 671739, Carbon Black, Prof. Donnet, 1993 by MARCEL DECCER, INC, New York, Seite 57 ff.) bekannt, bei dem ein mit Öldämpfen beladenes wasserstoffhaltiges Traggas an zahlreichen Austrittsöffnungen in Luftüberschuss verbrannt wird. Die Flammen schlagen gegen wassergekühlte Walzen, was die Verbrennungsreaktion abbricht. Ein Teil des im Flammeninneren gebildeten Ruß schlägt sich auf den Walzen nieder und wird von diesen abgeschabt. Der im Abgasstrom verbleibende Ruß wird in Filtern abgetrennt. Ferner ist das Channelruß-Verfahren (Carbon Black, Prof. Donnet, 1993 by MARCEL DECCER, INC, New York, Seite 57 ff.) bekannt, bei dem eine Vielzahl von Erdgas gespeisten kleinen Flammen gegen wassergekühlte Eisenrinnen (Channels) brennen. Der an den Eisenrinnen abgeschiedene Ruß wird abgeschabt und in einem Trichter aufgefangen. Übliche Reaktoren zur Herstellung von Ruß werden bei Prozesstemperaturen von 1200 bis über 2200 °C in der Brennkammer betrieben. Das erfindungsgemäße Verfahren umfasst generell alle Ruß Herstellungsverfahren und Öfen, die zur Ruß Herstellung geeignet sind. Diese können wiederum mit verschiedenen Brennertechnologien ausgestattet sein. Ein Beispiel dafür ist der Hüls'er Lichtbogenofen (Lichtbogen). Für die Auswahl des Brenners ist es entscheidend, ob eine hohe Temperatur in der Flamme oder eine fette Flamme erzeugt werden soll. Als Aggregate können die Reaktoren die folgenden Brenner umfassen: Gasbrenner mit integriertem Verbrennungsluftgebläse, Gasbrenner für verdrallten Luftstrom, Kombinationsgasbrenner mit Gaseindüsung über periphere Lanzen, Hochgeschwindigkeitsbrenner, Schoppe-Impulsbrenner, Paralleldiffusionsbrenner, kombinierte Öl-Gas-Brenner, Stoßofenbrenner, Verdampfungsölbrenner, Brenner mit Luft- oder Dampfzerstäubung, Flachflammenbrenner, gasbeheizte Mantelstrahlrohre, sowie alle Brenner und Reaktoren, die sich zur Herstellung von Ruß oder zur Pyrolyse von Kohlenhydraten eignen.

Bevorzugt verwendet man beim erfindungsgemäßen Verfahren einen Flammruß oder einen Gasuß oder einen Furnaceruß. Ganz besonders bevorzugt werden Gasruße verwendet. Ebenfalls ganz besonders bevorzugt werden Furnaceruße oder oxidierte Furnaceruße, insbesondere mit niedriger Struktur, d.h. einer DBP von kleiner gleich 75 ml/(100g) verwendet.

Der im erfindungsgemäßen Verfahren verwendete amorphe Kohlenstoff weist bevorzugt eine inneren Oberfläche von 1 bis 1000 m²/g, besonders bevorzugt von 5 bis 800 m²/g, insbesondere von 10 bis 700 m²/g auf. Die Bestimmung der inneren bzw. speziellen Oberfläche erfolgt nach dem BET-Verfahren (ASTM D 6556).

Weiterhin bevorzugt weist der im erfindungsgemäßen Verfahren verwendete amorphe Kohlenstoff eine STSA-Oberfläche von 1 bis 600 m²/g, besonders bevorzugt von 5 bis 500 m²/g, insbesondere von 10 bis 450 m²/g auf. Die Bestimmung der STSA-Oberfläche erfolgt nach der ASTM D 6556.

Ebenfalls bevorzugt weist der im erfindungsgemäßen Verfahren verwendete amorphe Kohlenstoff eine DBP-Aufnahme von 10 bis 300 ml/(100g), besonders bevorzugt von 20 bis 250 ml/(100g), insbesondere von 30 bis 200 ml/(100g) auf. Die Bestimmung der DBP-Aufnahme erfolgt nach der ASTM D 2414. Insbesondere im Fall von Furnacerußen oder oxidierten Furnacerußen hat es sich als besonders Vorteilhaft erwiesen, wenn diese eine eher niedrige Struktur, d.h. eine DBP-Aufnahme von weniger als 75 ml/(100g), bevorzugt 10 bis 75 ml/(100 g), besonders bevorzugt 20 bis 60 ml/(100 g) aufweisen.

Weiterhin hat es sich gezeigt, dass der pH-Wert der erfindungsgemäß verwendeten amorphen Kohlenstoffkomponente, gemessen nach der ASTM D 1512 bevorzugt kleiner gleich 11 besonders bevorzugt 1 bis 10 sein sollte.

In einer speziellen Ausführungsform weist die erfindungsgemäß verwendete amorphe Kohlenstoffkomponente eine Kombination der zuvor genannten physikalisch-chemischen Eigenschaften auf.

Kommt es im erfindungsgemäßen Verfahren besonders auf die Reinheit der Endprodukte an, so weisen die Edukte besonders bevorzugt das weiter unten definierte Verunreinigungsprofil auf. Das Mischungsverhaltnis Kohlenhydrat zu Entschäumer, d. h. amorphem Kohlenstoff, gerechnet als Gewichtsanteile Kohlenstoff, liegt beim erfindungsgemäßen Verfahren bevorzugt in einem Bereich von 1000 zu 0,1 bis 0,1 zu 1000. Insbesondere kann man das Gewichtsverhältnis Kohlenhydratkomponente zu amorpher Kohlenstoffkomponente jedoch auf 800 zu 0,1 bis 1 zu 1, besonders bevorzugt auf 500 zu 1 bis 20 zu 1, ganz besonders bevorzugt auf 250 zu 1 bis 10 zu 1 und speziell bevorzugt auf 200 zu 1 bis 5 zu 1, einstellen.

Die Kohlenhydratkomponente und die Komponente aus amorphem Kohlenstoff können, bevorzugt in Pulverform, gemischt und das Gemisch pyrolysiert werden. Es ist aber auch möglich das Gemisch vor der Pyrolyse einem Formgebungsprozeß zu unterziehen. Hierzu sind alle dem Fachmann bekannten Formgebungsprozesse anwendbar. Geeignete Verfahren wie z. B. Brikettierung, geeignete Verfahren wie Extrusion, Pressen, Tablettieren, Pelletieren, Granulierung sowie weitere an sich bekannt Verfahren sind dem Fachmann hinlänglich bekannt. Um stabile Formkörper zu erhalten kann z. B. Kohlenhydratlösung oder Melasse oder Ligninsulfonat oder Pentalauge (Abfalllauge aus der Pentaerythrit-Herstellung) oder Polymerdispersionen wie z. B. Polyvinylalkohol, Polyethylenoxid, Polyacrylat, Polyurethan, Polyvinylacetat, Styrolbutadien, Styrolacrylat, Naturlatex, oder Gemische davon als Binder zugesetzt werden.

Als Apparatur für die Durchführung des erfindungsgemäßen Verfahrens kann man beispielsweise einen induktionsbeheizten Vakuumreaktor verwenden, wobei der Reaktor in Edelstahl ausgeführt sein kann. Werden besonders reine Pyrolyseprodukte benötigt, so kann der Reaktor bevorzugt mit einem hinsichtlich der Reaktion geeigneten Inertstoff belegt bzw. ausgekleidet sein. Beispielsweise sind hochreines SiC, Si₃N₃, hochreines Quarz- bzw. Kieselsäureglas, hochreiner Kohlenstoff bzw. Graphit, Keramik verwendbar. Man kann aber auch andere geeignete Reaktionsbehältnisse verwenden, beispielsweise einen Induktionsofen mit Vakuumkammer zur Aufnahme entsprechender Reaktionstiegel bzw. -wanne.

### Bevorzugt führt man das erfindungsgemäße Verfahren wie folgt aus:

Das Reaktorinnere sowie das Reaktionsgefäß werden geeigneterweise getrocknet und mit einem Inertgas, das beispielsweise auf eine Temperatur zwischen Raumtemperatur und 300 °C erwärmt sein kann, gespült. Anschließend füllt man das zu pyrolysierende Gemisch oder den Formkörper aus Kohlenhydrat bzw. Kohlenhydratgemisch nebst dem amorphen Kohlenstoff als Entschäumerkomponente in den Reaktionsraum bzw. das Reaktionsgefäß der Pyrolyseapparatur. Bei Gemischen verden die Einsatzstoffe zuvor bevorzugt innig gemischt, unter vermindertem Druck entgast und unter Schutzgas in den vorbereiteten Reaktor überführen. Dabei kann der Reaktor bereits leicht vorgeheizt sein. Anschließend kann man die Temperatur auf die gewünschte Pyrolysetemperatur kontinuierlich oder stufenweise vorfahren und den Druck verringern, um die aus dem Reaktionsgemisch entweichenden, gasförmigen Zersetzungsprodukte möglichst zügig abführen zu können. Dabei ist es insbesondere durch den Zusatz von amorphem Kohlenstoff von Vorteil, eine Schaumbildung des Reaktionsgemisches weitestgehend zu vermeiden. Nach Beendigung der Pyrolysereaktion kann man das Pyrolyseprodukt einige Zeit thermisch nachbehandeln, vorteilhaft bei einer Temperatur im Bereich von 1 000 bis 1 500°C.

In der Regel erhält man so ein Pyrolyseprodukt bzw. eine Zusammensetzung, die fast ausschließlich Kohlenstoff enthält. Dieses Pyrolyseprodukt zeichnet sich in einer bevorzugten Ausführungsform insbesondere durch einen sehr niedrigen Aschegehalt von weniger als 0,5 Gew. %, besonders bevorzugt 0,0000001 bis 0,1 Gew. %, ganz besonders bevorzugt0,000001 bis 0,01 Gew. % und speziell bevorzugt 0,000001 bis 0,001 Gew. % aus. Der Aschegehalt wird nach der ASTM D-1506-92 bestimmt. Insbesondere zeichnet sich das direkte Verfahrensprodukt des erfindungsgemäßen Pyrolyseverfahrens, bei Verwendung von hochreinen Edukten, durch seine hohe Reinheit und Verwendbarkeit für die Herstellung von polykristallinem Silicium, insbesondere von Solarsilicium für Photovoltaikanlagen, aber auch für medizinische Anwendungen aus. Was unter hochreinen Edukten und Pyrolyseprodukten zu verstehen ist wird weiter unten definiert.

Eine erfindungsgemäße Zusammensetzung (kurz auch Pyrolysat bzw. Pyrolyseprodukt genannt) kann wie gesagt besonders vorteilhaft als Einsatzstoff bei der Herstellung von Solarsilicium durch Reduktion von SiO₂ bei höherer Temperatur, insbesondere in einem Lichtbogenofen, verwendet werden. So kann man das erfindungsgemäße direkte Verfahrensprodukt in einfacher und wirtschaftlicher Weise als C-haltiges Reduktionsmittel in einem Verfahren einsetzen, wie beispielsweise aus US 4,247,528, US 4,460,556, US 4,294, 811 sowie WO 2007/106860 zu entnehmen ist.

In einer speziellen Ausführungsform kann man das erfindungsgemäße Verfahren jedoch auch mit dem carbothermischen Reduktionsverfahren von Siliciumdioxid derart kombinieren, dass man erfindungsgemäße Formkörper aus unpyrolysiertem Kohlenhydrat oder Kohlenhydratgemisch und der amorphem Kohlenstoffkomponente, speziell bevorzugt in den oben genannten Gewischtsverhältnissen, direkt in den Reduktionsofen einführt, so dass dort in situ durch Pyrolyse des Kohlenhydrats die für die carbothermnische Reduktion des Siliciumdioxids benötigte Kohlenstoffkomponente erzeugt wird.

Mit anderen Worten, soll das erfindungsgemäße Pyrolyseprodukt zur Herstellung von Silicium verwendet werden kann entweder zunächst die erfindungsgemäße Pyrolyse durchgeführt werden und dass fertig pyrolysierte Produkt der carbothermischen Reduktion zugeführt werden oder es kann wie zuvor beschrieben ein Formkörper aus unpyrolysiertem Kohlenhydrat oder Kohlenhydratgemisch und der amorphem Kohlenstoffkomponente derart in den Reduktionsreaktor eingeführt werden, dass dort in situ durch die erfindunngsgemäße Pyrolysereaktion das benötigte Kohlenstoffreduktionsmittel gebildet wird. Gegenstand der vorliegenden Erfindnung ist somit sowohl die Verwendung des erfindungsgemäßen Pyrolyseprodukts als auch die Verwendung eines Formkörper aus unpyrolysiertem Kohlenhydrat oder Kohlenhydratgemisch und der amorphem Kohlenstoffkomponente, speziell bevorzugt in den oben genannten Gewischtsverhältnissen, als Einsatzstoff bei der Herstellung von Silicium, bevorzugt metallurgischem Silicium oder Solarsilicium durch Reduktion von SiO₂ bei höherer Temperatur, insbesondere in einem Lichtbogenofen.

Wird das erfindungsgemäße Pyrolyseprodukt als Einsatzstoff bei der Herstellung von Silicium, beovrzugt mettalurgischem Silicium oder Solarsilicium durch Reduktion von SiO₂ bei höherer Temperatur verwendet, so wird bevorzugt zunächst unter optionalem Zusatz weiterer Komponenten, wie reines oder hochreines SiO₂, Aktivatoren, wie SiC, Bindemittel, wie Organosilane, Organosiloxane, Kohlenhydrate, Kieselgel, natürliche oder synthetische Harze, sowie hochreine Verarbeitungshilfsstoffe, wie Press-, Tablettier- oder Extrusionshilfsstoffe, wie Graphit, ein Formkörper mit einer definierten Form hergestellt, beispielsweise durch Granulieren, Pelletieren, Tablettieren, Extrudieren - um nur einige Beispiele zu nennen.

Ein reines Kohlenhydrat bzw. reiner amorpher Kohlenstoff bzw. reines Siliciumdioxid bzw. reines Pyrolyseprodukt, kennzeichnet sich dadurch, dass es einen Gehalt an:
a. Aluminium kleiner gleich 5 ppm bevorzugt oder zwischen 5 ppm und 0,0001 ppt, insbesondere zwischen 3 ppm bis 0,0001 ppt, bevorzugt zwischen 0,8 ppm bis 0,0001, ppt, besonders bevorzugt zwischen 0,6 ppm bis 0,0001 ppt, noch besser zwischen 0,1 ppm bis 0,0001 ppt, ganz besonders bevorzugt zwischen 0,01 ppm und 0,0001 ppt, wobei noch bevorzugter 1 ppb bis 0,0001 ppt ist,
b. Bor unter 10 ppm bis 0,0001 ppt, insbesondere im Bereich von 5 ppm bis 0,0001 ppt, bevorzugt im Bereich von 3 ppm bis 0,0001 ppt oder besonders bevorzugt im Bereich von 10 ppb bis 0,0001 ppt, noch bevorzugter im Bereich von 1 ppb bis 0,0001 ppt
c. Calcium kleiner gleich 2 ppm, bevorzugt zwischen 2 ppm und 0,0001 ppt, insbesondere zwischen 0,3 ppm bis 0,0001 ppt, bevorzugt zwischen 0,01 ppm bis 0,0001 ppt, besonders bevorzugt zwischen 1 ppb bis 0,0001 ppt,
d. Eisen kleiner gleich 20 ppm, bevorzugt zwischen 10 ppm und 0,0001 ppt, insbesondere zwischen 0,6 ppm und 0,0001 ppt, bevorzugt zwischen 0,05 ppm bis 0,0001 ppt, besonders bevorzugt zwischen 0,01 ppm bis 0,0001 ppt, und ganz besonders bevorzugt 1 ppb bis 0,0001 ppt;
e. Nickel kleiner gleich 10 ppm, bevorzugt zwischen 5 ppm und 0,0001 ppt, insbesondere zwischen 0,5 ppm und 0,0001 ppt, bevorzugt zwischen 0,1 ppm bis 0,0001 ppt, besonders bevorzugt zwischen 0,01 ppm bis 0,0001 ppt, und ganz besonders bevorzugt zwischen 1 ppb bis 0,0001 ppt
f. Phosphor kleiner 10 ppm bis 0,0001 ppt, bevorzugt zwischen 5 ppm bis 0,0001 ppt, insbesondere kleiner 3 ppm bis 0,0001 ppt, bevorzugt zwischen 10 ppb bis 0,0001 ppt und ganz besonders bevorzugt zwischen 1 ppb bis 0,0001 ppt
g. Titan kleiner gleich 2 ppm, bevorzugt kleiner gleich 1 ppm bis 0,0001 ppt, insbesondere zwischen 0,6 ppm bis 0,0001 ppt, bevorzugt zwischen 0,1 ppm bis 0,0001 ppt, besonders bevorzugt zwischen 0,01 ppm bis 0,0001 ppt, und ganz besonders bevorzugt zwischen 1 ppb bis 0,0001 ppt.
h. Zink kleiner gleich 3 ppm, bevorzugt kleiner gleich 1 ppm bis 0,0001 ppt, insbesondere zwischen 0,3 ppm bis 0,0001 ppt, bevorzugt zwischen 0,1 ppm bis 0,0001 ppt, besonders bevorzugt zwischen 0,01 ppm bis 0,0001 ppt und ganz besonders bevorzugt zwischen 1 ppb bis 0,0001 ppt, aufweist.

Ein hochreines Kohlenhydrat bzw. amorpher Kohlenstoff bzw. Siliciumdioxid bzw. Pyrolyseprodukt, kennzeichnet sich dadurch, dass die Summe der o. g. Verunreinigungen kleiner 10, bevorzugt kleiner 5 ppm, besonders bevorzugt kleiner 4 ppm, ganz besonders bevorzugt kleiner 3 ppm, speziell bevorzugt 0,5 bis 3 ppm und ganz speziell bevorzugt 1 ppm bis 3 ppm, beträgt. Wobei für jedes Element eine Reinheit im Bereich der Nachweisgrenze angestrebt werden kann.

Die Definitionen von metallurgischem und Solarsilicium sind allgemein bekannt. So weist Solarsilicium eine Siliciumgehalt von größer gleich 99,999 Gew.% auf.

Die Bestimmung von Verunreinigungen wird mittels ICP-MS/OES (Induktionskopplungsspektrometrie - Massenspektrometrie/optische Elektronenspektrometrie) sowie AAS (Atomabsorptionsspektroskopie) durchgeführt.

Die vorliegende Erfindung wird durch die nachfolgenden Beispiele sowie das Vergleichsbeispiel näher erläutert und veranschaulicht, ohne den Gegenstand der Erfindung zu beschränken.

### Beispiele:

### Vergleichsbeispiel 1:

5 g eines handelsüblichen Raffinade-Zucker wurden in einem Reagensglas mit einer Länge von 18 cm und einem Durchmesser von 18 mm zum Schmelzen gebracht und anschließend auf etwa 400 °C erhitzt. Das Reaktionsgemisch schäumt beim Erhitzen stark auf. Der Zucker karamellisiert und verkokt. Das gebildete Pyrolyseprodukt haftet an der Wand des Reaktionsgefäßes an. Die Schaumhöhe im Reagensglas betrug 10 cm.

### Beispiele 2-10:

Handelsüblicher Raffinade-Zucker wurde zusammen mit Ruß in unterschiedlichen Gewichtsverhältnissen gemischt, geschmolzen und auf etwa 400 °C erhitzt. Der Zucker karamellisiert und verkokt. Die Schaumbildung ist deutlich reduziert bzw. bleibt aus. Die verwendeten Ruße unterscheiden sich in Oberfläche, Struktur und Oberflächenchemie.

Die Ergebnisse sind in der nachfolgenden Tabelle 1 zusammengefasst.

Man erkennt an Tabelle 1, dass insbesondere Gasruße (siehe FW1), welche in der Regel einen sehr niedrigen pH-Wert haben und Furnace Ruße mit niedriger Struktur, d.h. niedriger DBP-Zahl (siehe Printex 35 im vergleich zu Printex 30 und Printex 3 besonders gute Entschäumereigenschaften aufweisen. Je nach Einsatzmenge kann jedoch auch mit anderen Rußen eine gute Entschäumerwirkung erzielt werden.

**Tabelle 1**

| | | Vergleichsbeispiel 1 | Beispiel 2 | Beispiel 3 | Beispiel 4 | Beispiel 5 | Beispiel 6 | Beispiel 7 | Beispiel 8 | Beispiel 9 | Beispiel 10 |
|---|---|---|---|---|---|---|---|---|---|---|---|
| Zuckermenge | g | 5 | 4,95 | 4,5 | 4,975 | 4,95 | 4,9 | 4,9 | 4,95 | 4,9 | 4,9 |
| Rußmenge | g | 0 | 0,05 | 0,5 | 0,025 | 0,05 | 0,1 | 0,1 | 0,05 | 0,1 | 0,1 |
| Schaumhöhe | cm | 10 | 8 | 4 | 7, 5 | 3,5 | 3 | 7 | keine Schaum-bildung | 3 | keine Schaum-bildung |
| Rußtyp ¹⁾ | | - | Durex | Durex | Colour Black FW171 | | | Printex 30 | FW1²⁾ | Printex 3 | Printex 35 |
| BET | m²/g | - | 20 | 20 | 620 | 620 | 620 | 80 | 320 | 80 | 65 |
| STSA | m²/g | - | 18,5 | 18,5 | 365 | 365 | 365 | 78 | 205 | 75,5 | 62 |
| DBP | ml/100g | - | 117 | 117 | 110 | 110 | 110 | 105 | n.b. | 123 | 42 |
| pH-Wert | | - | 7, 5 | 7, 5 | 8 | 8 | 8 | 9,5 | 3,5 | 9,5 | 9 |
| Flüchtige Bestand-teile | % | - | 0, 5 | 0, 5 | 1,5 | 1,5 | 1,5 | 0,7 | 5,0 | 0,9 | 0,5 |

| | | | | | | | | | | | |
|---|---|---|---|---|---|---|---|---|---|---|---|
| ¹⁾ Alle verwendeten Ruße sind erhältlich bei der EVONIK^{®} Degussa GmbH ²⁾ Gaßruß FW1 | | | | | | | | | | | |

## Patentansprüche

1. Verfahren zur technischen Pyrolyse eines Kohlenhydrats oder Kohlenhydratgemischs, **dadurch gekennzeichnet, dass** es unter Zusatz von amorphem Kohlenstoff durchgeführt wird.

2. Verfahren nach Anspruch 1,
**dadurch gekennzeichnet,**
**dass** es sich bei dem amorphen Kohlenstoff um Aktivkohle oder einen Ruß oder ein pyrolysiertes Kohlenhydrat, insbesondere pyrolysierten Zucker, oder Gemische davon handelt.

3. Verfahren nach Anspruch 2,
**dadurch gekennzeichnet,**
**dass** es sich um einen Ruß, bevorzugt einen Gasßruß oder einen Furnace Ruß oder einen Flammruß oder Gemische davon handelt, bevorzugt mit einer BET-Oberfläche von 1 bis 1000 m²/g und/oder einer STSA-Oberfläche von 1 bis 600 m²/g und/oder einer DBP von 10 bis 300 ml/100g und/oder einem pH-Wert von kleiner gleich 11 handelt.

4. Verfahren einem der Ansprüche 1 bis 3,
**dadurch gekennzeichnet,**
**dass** man als Kohlenhydrat-Komponente mindestens einen kristallinen Zucker einsetzt.

5. Verfahren nach einem der Ansprüche 1 bis 4,
**dadurch gekennzeichnet,**
**dass** man Kohlenhydrat und den amorphen Kohlenstoff in einem Gewichtsverhältnis von 1000 zu 0,1 bis 0,1 zu 1000, bevorzugt 800 zu 0,1 bis 1 zu 1, besonders bevorzugt auf 500 zu 1 bis 20 zu 1, ganz besonders bevorzugt auf 250 zu 1 bis 10 zu 1 und speziell bevorzugt auf 200 zu 1 bis 5 zu 1 einsetzt.

6. Verfahren nach einem der Ansprüche 1 bis 5,
**dadurch gekennzeichnet,**
**dass** man das Gemisch aus Kohlenhydrat und amorphen Kohlenstoff vor der Pyrolyse einem Formgebungsprozeß, bevorzugt Brikettieren, Extrusion, Verpressen, Tablettieren, Pelletieren, Granulieren unterzieht und den erhaltenen Formkörper pyrolysiert.

7. Verfahren nach einem der Ansprüche 1 bis 6,
**dadurch gekennzeichnet,**
**dass** man die Pyrolyse bei einer Temperatur unter 800 °C, bevorzugt bei 300 bis 800 °C, ganz besonders bevorzugt bei 350 bis 700 °C und speziell bevorzugt bei 400 bis 600 °C oder bei einer Temperatur zwischen 800 und 1700 °C, besonders bevorzugt zwischen 900 und 1600 °C, ganz besonders bevorzugt bei 1000 bis 1500 °C und insbesondere bei 1000 bis 1400 °C durchführt.

8. Verfahren nach einem der Ansprüche 1 bis 7,
**dadurch gekennzeichnet,**
**dass** man die Pyrolyse bei einem Druck zwischen 1 mbar und 1 bar und/oder in einer Inertgasatmosphäre durchführt.

9. Verfahren nach einem der Ansprüche 1 bis 8,
**dadurch gekennzeichnet,**
**dass** die Kohlenhydratkomponenten und oder die amorphe Kohlenstoff-komponente in reiner bzw. hochreiner Form eingesetzt wird, bevorzugt mit einem Gehalt an:
a. Aluminium kleiner gleich 5 ppm bevorzugt oder zwischen 5 ppm und 0,0001 ppt, insbesondere zwischen 3 ppm bis 0,0001 ppt, bevorzugt zwischen 0,8 ppm bis 0,0001, ppt, besonders bevorzugt zwischen 0,6 ppm bis 0,0001 ppt, noch besser zwischen 0,1 ppm bis 0,0001 ppt, ganz besonders bevorzugt zwischen 0,01 ppm und 0,0001 ppt, wobei noch bevorzugter 1 ppb bis 0,0001 ppt ist,
b. Bor unter 10 ppm bis 0,0001 ppt, insbesondere im Bereich von 5 ppm bis 0,0001 ppt, bevorzugt im Bereich von 3 ppm bis 0,0001 ppt oder besonders bevorzugt im Bereich von 10 ppb bis 0,0001 ppt, noch bevorzugter im Bereich von 1 ppb bis 0,0001 ppt
c. Calcium kleiner gleich 2 ppm, bevorzugt zwischen 2 ppm und 0,0001 ppt, insbesondere zwischen 0,3 ppm bis 0,0001 ppt, bevorzugt zwischen 0,01 ppm bis 0,0001 ppt, besonders bevorzugt zwischen 1 ppb bis 0,0001 ppt,
d. Eisen kleiner gleich 20 ppm, bevorzugt zwischen 10 ppm und 0,0001 ppt, insbesondere zwischen 0,6 ppm und 0,0001 ppt, bevorzugt zwischen 0,05 ppm bis 0,0001 ppt, besonders bevorzugt zwischen 0,01 ppm bis 0,0001 ppt, und ganz besonders bevorzugt 1 ppb bis 0,0001 ppt;
e. Nickel kleiner gleich 10 ppm, bevorzugt zwischen 5 ppm und 0,0001 ppt, insbesondere zwischen 0,5 ppm und 0,0001 ppt, bevorzugt zwischen 0,1 ppm bis 0,0001 ppt, besonders bevorzugt zwischen 0,01 ppm bis 0,0001 ppt, und ganz besonders bevorzugt zwischen 1 ppb bis 0,0001 ppt
f. Phosphor kleiner 10 ppm bis 0,0001 ppt, bevorzugt zwischen 5 ppm bis 0,0001 ppt, insbesondere kleiner 3 ppm bis 0,0001 ppt, bevorzugt zwischen 10 ppb bis 0,0001 ppt und ganz besonders bevorzugt zwischen 1 ppb bis 0,0001 ppt
g. Titan kleiner gleich 2 ppm, bevorzugt kleiner gleich 1 ppm bis 0,0001 ppt, insbesondere zwischen 0,6 ppm bis 0,0001 ppt, bevorzugt zwischen 0,1 ppm bis 0,0001 ppt, besonders bevorzugt zwischen 0,01 ppm bis 0,0001 ppt, und ganz besonders bevorzugt zwischen 1 ppb bis 0,0001 ppt.
h. Zink kleiner gleich 3 ppm, bevorzugt kleiner gleich 1 ppm bis 0,0001 ppt, insbesondere zwischen 0,3 ppm bis 0,0001 ppt, bevorzugt zwischen 0,1 ppm bis 0,0001 ppt, besonders bevorzugt zwischen 0,01 ppm bis 0,0001 ppt und ganz besonders bevorzugt zwischen 1 ppb bis 0,0001 ppt,
und ganz besonders bevorzugt einer Summe der o. g. Verunreinigungen von kleiner 10, bevorzugt kleiner 5 ppm, besonders bevorzugt kleiner 4 ppm, ganz besonders bevorzugt kleiner 3 ppm, speziell bevorzugt 0,5 bis 3 ppm und ganz speziell bevorzugt 1 ppm bis 3 ppm.

10. Zusammensetzung (Pyrolyseprodukt), erhalten nach einem der Ansprüche 1 bis 9.

11. Pyrolyseprodukt aus aus zumindest einem Kohlenhydrat,
**dadurch gekennzeichnet, dass** es einen sehr niedrigen Aschegehalt von weniger als 0,5 Gew. %, besonders bevorzugt 0,0000001 bis 0,1 Gew. %, ganz besonders bevorzugt0, 000001 bis 0,01 Gew. % und speziell bevorzugt 0,000001 bis 0,001 Gew. % und oder einen Gehalt an:
a. Aluminium kleiner gleich 5 ppm bevorzugt oder zwischen 5 ppm und 0,0001 ppt, insbesondere zwischen 3 ppm bis 0,0001 ppt, bevorzugt zwischen 0,8 ppm bis 0,0001, ppt, besonders bevorzugt zwischen 0,6 ppm bis 0,0001 ppt, noch besser zwischen 0,1 ppm bis 0,0001 ppt, ganz besonders bevorzugt zwischen 0,01 ppm und 0,0001 ppt, wobei noch bevorzugter 1 ppb bis 0,0001 ppt ist,
b. Bor unter 10 ppm bis 0,0001 ppt, insbesondere im Bereich von 5 ppm bis 0,0001 ppt, bevorzugt im Bereich von 3 ppm bis 0,0001 ppt oder besonders bevorzugt im Bereich von 10 ppb bis 0,0001 ppt, noch bevorzugter im Bereich von 1 ppb bis 0,0001 ppt
c. Calcium kleiner gleich 2 ppm, bevorzugt zwischen 2 ppm und 0,0001 ppt, insbesondere zwischen 0,3 ppm bis 0,0001 ppt, bevorzugt zwischen 0,01 ppm bis 0,0001 ppt, besonders bevorzugt zwischen 1 ppb bis 0,0001 ppt,
d. Eisen kleiner gleich 20 ppm, bevorzugt zwischen 10 ppm und 0,0001 ppt, insbesondere zwischen 0,6 ppm und 0,0001 ppt, bevorzugt zwischen 0,05 ppm bis 0,0001 ppt, besonders bevorzugt zwischen 0,01 ppm bis 0,0001 ppt, und ganz besonders bevorzugt 1 ppb bis 0,0001 ppt;
e. Nickel kleiner gleich 10 ppm, bevorzugt zwischen 5 ppm und 0,0001 ppt, insbesondere zwischen 0,5 ppm und 0,0001 ppt, bevorzugt zwischen 0,1 ppm bis 0,0001 ppt, besonders bevorzugt zwischen 0,01 ppm bis 0,0001 ppt, und ganz besonders bevorzugt zwischen 1 ppb bis 0,0001 ppt
f. Phosphor kleiner 10 ppm bis 0,0001 ppt, bevorzugt zwischen 5 ppm bis 0,0001 ppt, insbesondere kleiner 3 ppm bis 0,0001 ppt, bevorzugt zwischen 10 ppb bis 0,0001 ppt und ganz besonders bevorzugt zwischen 1 ppb bis 0,0001 ppt
g. Titan kleiner gleich 2 ppm, bevorzugt kleiner gleich 1 ppm bis 0,0001 ppt, insbesondere zwischen 0,6 ppm bis 0,0001 ppt, bevorzugt zwischen 0,1 ppm bis 0,0001 ppt, besonders bevorzugt zwischen 0,01 ppm bis 0,0001 ppt, und ganz besonders bevorzugt zwischen 1 ppb bis 0,0001 ppt.
h. Zink kleiner gleich 3 ppm, bevorzugt kleiner gleich 1 ppm bis 0,0001 ppt, insbesondere zwischen 0,3 ppm bis 0,0001 ppt, bevorzugt zwischen 0,1 ppm bis 0,0001 ppt, besonders bevorzugt zwischen 0,01 ppm bis 0,0001 ppt und ganz besonders bevorzugt zwischen 1 ppb bis 0,0001 ppt,
aufweist.

12. Verwendung einer Zusammensetzung (Pyrolyseprodukt) nach Anspruch 10 oder 11 als Einsatzstoff bei der Herstellung von Silicium, bevorzugt metallurgischem Silicium oder Solarsilicium, durch Reduktion von SiO₂ bei höherer Temperatur, insbesondere in einem Lichtbogenofen oder zur Herstellung von Graphitformteilen, bevorzugt Elektroden insbesondere hochreine Elektroden, Kohlebürsten, Heizelemente, Wärmetauscher oder als Aufkohlungsmittel für Stahl oder bei der Diamantherstellung oder als Reduktionsmittel bei der Hartmetall-Herstellung (W, Mo, Cr, Ti, Ta, Co, V, etc.) oder bei der Zirkon-Herstellung oder als Abdeckung von Metallschmelzen oder als Ersatz von Holzschnitzeln bei metallurgischen Prozessen.

13. Verfahren zur Herstellung von Silicium, bevorzugt metallurgischem Silicium oder Solar-Silicium,
**dadurch gekennzeichnet,**
**dass** man ein Gemisch aus einem Kohlehydrat, bevorzugt einem mittels Ionenaustauschersäulen gereinigen Kohlehydrat, und einem amorphen Kohlenstoff, bevorzugt einem hochreinen amorphen Kohlenstoff, bei Temperaturen von 400 bis 700 °C pyrolysiert und dass Pyrolyseprodukt anschließend zur Herstellung von Silicium, bevorzugt hochreinem Silicium, besonders bevorzugt Solarsilicium, verwendet.

14. Verfahren zur Herstellung von Silicium, bevorzugt metallurgischem Silicium oder Solar-Silicium,
**dadurch gekennzeichnet,**
**dass** man ein Gemisch aus einem Kohlehydrat, bevorzugt einem mittels Ionenaustauschersäulen gereinigen Kohlehydrat, und einem amorphen Kohlenstoff, bevorzugt einem hochreinen amorphen Kohlenstoff, in unpyrolysierter Form in den Reduktionsreaktor einführt, dort in situ durch Pyrolyse das Kohlenstoffreduktionsmittel herstellt und dieses anschließend mit Siliciumdioxid oder Siliciumcarbid zu Silicium, bevorzugt hochreinem Silicium, besonders bevorzugt Solarsilicium, reagiert.

15. Verfahren nach Anspruch 13 oder 14, **dadurch gekennzeichnet, dass** man aus dem gemisch von Kohlenhydrat und amorphem Kohlenstoff zunächst einen Formkörper herstellt und dann pyrolysiert.

16. Verfahren zur Herstellung von Silicium, bevorzugt Solarsilicium, **dadurch gekennzeichnet, dass** eine Graphitelektrode oder Graphitformteile nach Anspruch 12 als Apparatebestandteile verwendet werden.
